# EUROPEAN PATENT SPECIFICATION

(11) **EP 2 871 121 B1**
(45) Date of publication and mention of the grant of the patent: **17.02.2016**
(21) Application number: 14182251.0
(22) Date of filing: 26.08.2014
(51) Int. Cl.: B62J 17/06, B62J 35/00

(54) **Saddle riding type vehicle**
Sattelfahrzeug
Véhicule de type à selle

(30) Priority: 06.11.2013 JP 2013229981
(43) Date of publication of application: 13.05.2015
(73) Proprietor: Yamaha Hatsudoki Kabushiki Kaisha, Iwata-shi, Shizuoka 438-8501 (JP)
(72) Inventor: Nakasai, Makoto, Iwata-shi, Shizuoka 438-8501 (JP)
(74) Representative: Grünecker Patent- und Rechtsanwälte PartG mbB

(56) References cited:
- JP-A- H0 321 578
- JP-A- S6 283 282

## Description

The present invention relates to a saddle riding type vehicle according to the preamble of independent claim 1. Such a saddle riding type vehicle can be taken from the prior art document JP S62-83282 A**.**

A saddle riding type vehicle is provided with a fuel tank. In some scooter type saddle riding type vehicles, a fuel tank is provided ahead of and below a seat and covered with a vehicle body cover from above.

For example, prior art document JP H03-21578 A discloses a saddle riding type vehicle with handles and a vehicle body cover having a front cover portion provided below the handles to store a steering shaft and a head pipe portion. A seat is provided behind the handles, wherein a distance between rear ends of the handles and a front end of the seat in the front-back direction is much larger than a distance between an upper end of a rear edge of the front cover portion and the rear ends of the handles in the front-back direction in a side view. A portion of the vehicle body cover is provided to extend in a front-back direction between the front cover portion and the seat and cover a fuel tank from above. A foot board portion is provided to each of left and right of the portion and connected to a lower end of the portion. The portion is provided with an arc shaped front section having an upper edge inclined backward and downward and a straight shaped rear section having an upper edge inclined backward and upward in a side view. The fuel tank is provided with a fuel inlet and a fuel cap used to cover the fuel inlet, wherein the fuel cap is being exposed at an upper surface of the straight shaped rear section of the cover portion.

In a scooter type vehicle disclosed by JP-A 2012-62055, for example, a straddling portion is provided in a relatively low position between handles and a seat. The straddling portion is provided with a center tunnel portion that extends in a front-back direction and has a rear part inclined obliquely downward. The center tunnel portion has an upwardly raised shape in a front cross section and stores a fuel tank therein. The center tunnel portion is provided with a lid and a tray opened/closed by the lid. A fuel inlet and a fuel cap of the fuel tank are provided in the tray of the center tunnel portion. When the lid of the center tunnel portion is opened and the fuel cap of the fuel tank is removed, the fuel inlet of the fuel tank is exposed.

In the scooter type vehicle disclosed by JP-A 2012-62055, a distance between rear ends of the handles and a front end of the seat in the front-back direction is smaller than a distance between an upper end of a rear edge of a front cover portion that stores a steering mechanism and the rear ends of the handles in the front-back direction in a side view. Therefore, the scooter type vehicle has a compact vehicle body having a short wheelbase.

In the scooter type vehicle disclosed by JP-A 2012-62055, the fuel tank is provided in the center tunnel portion positioned ahead of the seat and therefore a wide storage space is provided under the seat. A battery storage box and an item storage box are provided in the storage space. Despite its compact vehicle body, the scooter type vehicle described above can secure a fuel tank capacity and a storage space by arranging the fuel tank and these storage boxes in the described manner.

However, the scooter type vehicle disclosed by JP-A 2012-62055 allows the fuel tank capacity and the storage space to be secured while keeping its body compact and therefore the center tunnel portion at the straddling portion is relatively high. Therefore, in the above described scooter type vehicle, a rider may feel inconvenience in straddling the straddling portion, which degrades comfort in getting on and off from the vehicle.

It is an object of the present invention to provide a saddle riding type vehicle having a compact vehicle body that can secure a sufficient capacity for a fuel tank and a sufficient storage space and provide increased comfort in getting on and off from the vehicle. According to the present invention said object is solved by a saddle riding type vehicle having the features of independent claim 1. Preferred embodiments are laid down in the dependent claims.

Accordingly, a saddle riding type vehicle includes handles, a steering shaft that extends downward from the handles, a head pipe having the steering shaft inserted therein, a seat provided behind the handles, a storage space provided under the seat, a fuel tank having a fuel inlet and a fuel cap used to cover the fuel inlet, and a vehicle body cover. The vehicle body cover includes a front cover portion provided below the handles to store at least a part of the steering shaft and the head pipe, an arch portion provided to extend in a front-back direction between the front cover portion and the seat and cover the fuel tank from above and having a convex front sectional shape, and a foot board portion provided to each of left and right of the arch portion and connected to a lower end of the arch portion. The front cover portion has a rear edge that extends in an up-down direction in a side view. A distance between rear ends of the handles and a front end of the seat in the front-back direction is smaller than a distance between an upper end of the rear edge of the front cover portion and the rear ends of the handles in the front-back direction in the side view. The arch portion has a front part having an upper edge inclined backward and downward and a rear part having an upper edge inclined backward and upward in the side view. The fuel cap is exposed at an upper surface of the rear part of the arch portion.

The saddle riding type vehicle described above has a compact vehicle body in which the distance between the rear ends of the handles and the front end of the seat in the front-back direction is smaller than the distance between the upper end of the rear edge of the front cover portion and the rear ends of the handles in the front-back direction in a side view. The saddle riding type vehicle described above has the compact vehicle body and can secure a sufficient capacity for the fuel tank and a sufficient storage space and provide increased comfort in getting on and off from the vehicle.

Other features, elements, steps, characteristics and advantages will become more apparent from the following detailed description of the preferred embodiments of the present teaching with reference to the attached drawings.

### BRIEF DESCRIPTION OF THE DRAWINGS

Fig. 1 is a left side view of a saddle riding type vehicle according to one preferred embodiment.
Fig. 2 is a left side view of a part of a vehicle main body in the saddle riding type vehicle in Fig. 1.
Fig. 3 is a right side view of a part of a vehicle main body in the saddle riding type vehicle in Fig. 1.
Fig. 4 is a left side view of a front part of the saddle riding type vehicle in Fig. 1.
Fig. 5 is a partial plan view of the saddle riding type vehicle in Fig. 1.
Fig. 6 is a partial perspective view of the saddle riding type vehicle in Fig. 1 as viewed from the upper left.
Fig. 7 is a sectional view of the saddle riding type vehicle in Fig. 5 taken along VII-VII.
Fig. 8A is a partial left side view of an example of a saddle riding type vehicle according to the present teaching.
Fig. 8B is a partial left side view of an example of a conventional saddle riding type vehicle.

### DESCRIPTION OF THE EMBODIMENTS

There is a saddle riding type vehicle in which an arch portion having an upward raised front section is formed between a front cover portion and a seat, a fuel tank is provided in the arch portion, and a storage space is secured under the seat. The fuel tank and the storage space are provided in the arch portion and under the seat, respectively, so that the vehicle body can be compact in the front-back direction while a sufficient capacity for the fuel tank and a sufficient storage space are secured. In the saddle riding type vehicle, a part of a vehicle body cover between the front cover portion that stores a steering mechanism and the seat usually has an increased height. Therefore, a rider may feel inconvenience in straddling a part of the vehicle body cover between the handles and the seat, which degrades comfort in getting on and off from the vehicle.

In the above-described saddle riding type vehicle, a front part of the arch portion has its upper edge inclined backward and downward from a lower end of a rear edge of the front cover portion in a side view. A rear part of the arch portion has its upper edge inclined forward and downward from a front end part of the seat in a side view. The front end part of the seat is positioned below the lower end of the rear edge of the front cover portion.

The arch portion having the above-described structure, the low level part is extended as the rear part is prolonged in the front-back direction and the height of the arch portion as a whole is reduced. The inventor took notice of the point and had the fuel cap of the fuel tank exposed at an upper surface of the rear part of the arch portion so that the rear part of the arch portion had a greater length in the front-back direction than in a conventional saddle riding type vehicle. In this way, the height of the arch portion as a whole can be kept from increasing, and increased comfort in getting on and off from the vehicle can be provided.

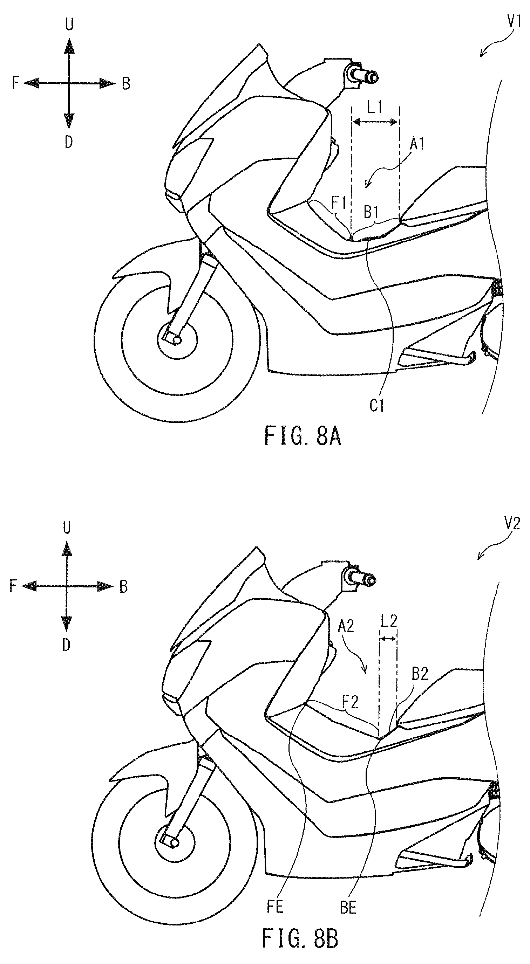

The advantage of the teaching described above will be described by referring to a comparison between an example of a saddle riding type vehicle according to the present teaching and an example of a conventional saddle riding type vehicle. As shown in Fig. 8A, in a vehicle V1 as the example of the vehicle according to the present teaching, a fuel cap C1 of a fuel tank is exposed at an upper surface of a rear part B1 of an arch portion A1, so that a sufficient length L1 is secured for the rear part B1 of the arch portion A1 in the front-back direction. On the other hand, as shown in Fig. 8B, in a vehicle V2 as the example of the conventional vehicle, a rear part B2 of an arch portion A2 has a shorter length L2 in the front-back direction than the length L1 in the vehicle V1.

Note that in the vehicle V2, a storage space should be secured under the arch portion A2. Therefore, a person skilled in the art would not set a lower end BE of an upper edge of the arch portion A2 in a side view to a lower position than that shown in Fig. 8B. The position of a front end FE of the upper edge of the arch portion A2 in a side view depends on the shape of the vehicle body frame and therefore the position of the front end FE would not be changed from the position shown in Fig. 8B.

When the vehicles V1 and V2 are compared, in the vehicle V1, the rear part B1 has a greater length, so that the position of a front part F1 is lower, while in the vehicle V2, the rear part B2 has a shorter length and therefore a front part F2 has a greater height. More specifically, the height of the arch portion as a whole is lower in the vehicle V1 than in the vehicle V2. In this way, in the vehicle V1, the height of the arch portion A1 is kept from increasing, which provides increased comfort in getting on and off from the vehicle.

In a saddle riding type vehicle conceived by the inventor, a fuel cap of a fuel tank is exposed at an upper surface of a rear part of an arch portion, so that a lid used to cover the fuel cap is not necessary. Therefore, the arch portion can be further kept from increasing in height, which provides more comfort in getting on and off from the vehicle.

Therefore, the saddle riding type vehicle conceived by the inventor can provide increased comfort in getting on and off from the vehicle despite its compact vehicle body.

### Embodiments

Now, a saddle riding type vehicle according to a preferred embodiment of the present teaching will be described. In the following description, front-back, left-right, and up-down directions refer to these directions as viewed from a rider on a saddle riding type vehicle. In the drawings, the arrow F indicates a forward direction and the arrow B indicates a backward direction. The arrow R indicates a rightward direction and the arrow L indicates a leftward direction. The arrow U indicates an upward direction and the arrow D indicates a downward direction. In the drawings, the same or corresponding portions are designated by the same reference characters and their description will not be repeated.

### Overall Structure

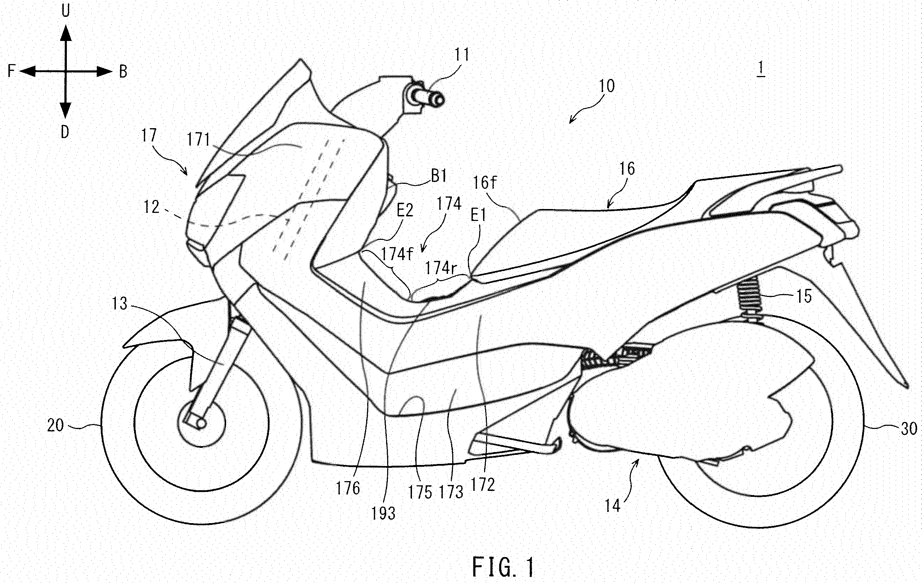

Fig. 1 is a left side view of a saddle riding type vehicle 1 according to the embodiment. The saddle riding type vehicle 1 is a scooter type vehicle that includes a vehicle main body 10, a front wheel 20 provided at a front part of the vehicle main body 10, and a rear wheel 30 provided at a rear part of the vehicle main body 10.

### Vehicle Main Body

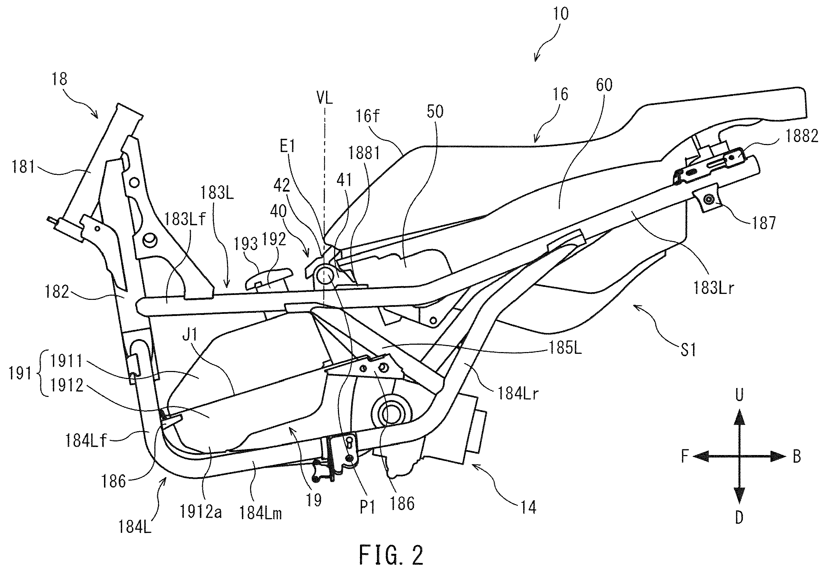

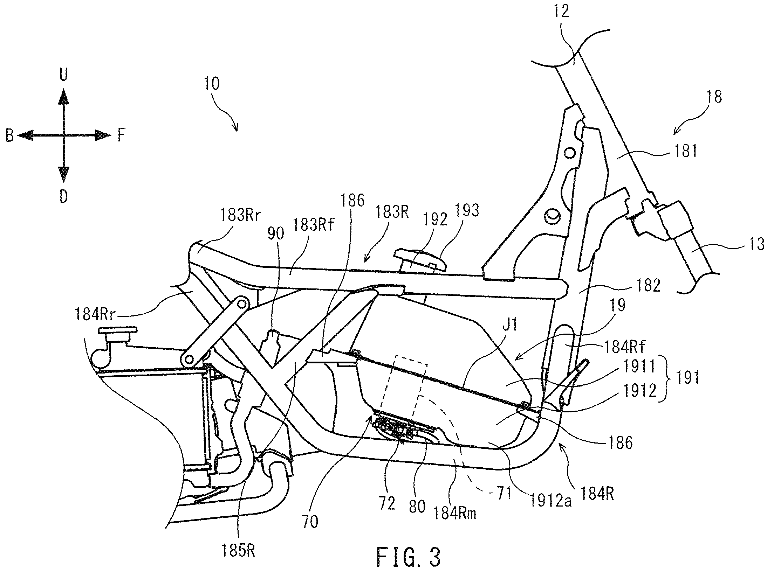

Now, the structure of the vehicle main body 10 will be described by referring to Figs. 1 to 3. Fig. 2 is a left side view of a part of the vehicle main body 10 removed of the vehicle body cover 17. Fig. 3 is a right side view of a part of the vehicle main body 10 removed of the vehicle body cover 17.

As shown in Fig. 1, the vehicle main body 10 includes left and right handles 11, a steering shaft 12, a front fork 13, a power unit 14, rear suspensions 15, a seat 16, and a vehicle body cover 17. As shown in Figs. 2 and 3, the vehicle main body 10 further includes a vehicle body frame 18 and a fuel tank 19.

As shown in Fig. 1, the steering shaft 12 extends downward from the handles 11. The front fork 13 is connected to a lower part of the steering shaft 12 through a bracket which is not shown. A lower end part of the front fork 13 supports the front wheel 20 in a rotatable manner. As the handles 11 are operated, the direction of the front wheel 20 changes.

The power unit 14 is provided below the seat 16 and swings in the up-down direction. The power unit 14 includes an engine and a transmission case provided behind the engine to store a transmission, though not specifically shown. The transmission case supports the rear wheel 30 in a rotatable manner. The engine is supported by the vehicle body frame 18.

The rear suspensions 15 are provided on the right and left of the rear wheel 30 at the rear part of the vehicle main body 10. An upper end part of each of the rear suspensions 15 is supported by the vehicle body frame 18. The rear suspensions 15 each has a lower end part coupled to a rear end part of the power unit 14.

### Seat

As shown in Fig. 1, the seat 16 is provided behind the handles 11. A front part 16f of the seat 16 has an upper edge that extends backward and obliquely upward in a side view.

As shown in Fig. 2, the front part 16f of the seat 16 is supported by a hinge 40. The hinge 40 includes a support member 41 and a movable member 42. The support member 41 is supported by the vehicle body frame 18. The support member 41 includes a rotation shaft P1. The movable member 42 has its front end part supported by the support member 41 so that the movable member 42 rotates around the rotation shaft P1 in the up-down direction. The movable member 42 has its rear end part attached to the front part 16f of the seat 16. The seat 16 rotates in the up-down direction as the movable member 42 rotates.

A part of the hinge 40 is provided ahead of a front end E1 of the seat 16. According to the embodiment, a vertical line VL passing through a center of the rotation shaft P1 is substantially in the same position as the front end E1 of the seat 16 in the front-back direction. In this way, the part of the hinge 40 ahead of the vertical line VL is provided ahead of the front end E1 of the seat 16.

### Storage Space

As shown in Fig. 2, a storage space S1 is provided under the seat 16. A battery storage box 50 that stores a battery and an item storage box 60 that stores an item such as a helmet are provided in the storage space S1.

The battery storage box 50 is positioned behind the hinge 40 and substantially immediately under the front part 16f of the seat 16 in the storage space S1. The battery storage box 50 is supported by the vehicle body frame 18. The item storage box 60 is provided behind the battery storage box 50. A front end part of the item storage box 60 is supported by the battery storage box 50. A rear end part of the item storage box 60 is supported by the vehicle body frame 18. The item storage box 60 has a concave shape so that an item can be stored therein.

The battery storage box 50 and the item storage box 60 are usually covered with the seat 16 from above. Fig. 2 shows the state in which the battery storage box 50 and the item storage box 60 are covered with the seat 16. When the seat 16 is rotated upward, the battery storage box 50 and the item storage box 60 are exposed.

### Vehicle Body Frame

Now, the vehicle body frame 18 according to the embodiment will be described. Note however that the structure of the vehicle body frame 18 according to the embodiment is not only the structure to which the present teaching is applicable. As shown in Fig. 2, the vehicle body frame 18 includes a head pipe portion 181, a front frame 182, an upper left frame 183L, a lower left frame 184L, and a left reinforcement frame 185L. As shown in Fig. 3, the vehicle body frame 18 further includes an upper right frame 183R, a lower right frame 184R, and a right reinforcement frame 185R. Hereinafter, the upper left frame 183L, the lower left frame 184L, and the left reinforcement frame 185L will generically be referred to as "left frames" and the upper right frame 183R, the lower right frame 184R, and the right reinforcement frame 185R will generically be referred to as "right frames" in some cases.

As shown in Figs. 2 and 3, the head pipe portion 181 is provided at a front part of the vehicle main body 10. The head pipe portion 181 has the steering shaft 12 inserted therein. The front frame 182 extends downward from the head pipe portion 181.

Now, the structure of the left frames will be described. The right frames have substantially the same structure as those of the left frames, and therefore the elements of the right frames corresponding to those of the left frames will be designated by similar reference characters and will not be described in detail. Note that as for reference characters for the right frames, "L" for the left frames is replaced by "R." Note that the left and right frames may be symmetric or asymmetric with respect to a vertical plane through a vehicle center in a vehicle-widthwise direction.

As shown in Fig. 2, the upper left frame 183L extends backward and obliquely upward from the front frame 182. A part of the upper frame 183L is provided in an arch portion 174 of the vehicle body cover 17 that will be described. A front part 183Lf of the upper left frame 183L extends outward in the vehicle-widthwise direction from the front frame 182. A rear part 183Lr of the upper left frame 183L extends backward from a rear end of the front part 183Lf. A rear suspension support 187 is provided at a rear end part of the rear part 183Lr of the upper left frame 183L. The rear suspension support 187 supports an upper end part of a rear suspension 15 (Fig. 1) provided to the left of the rear wheel 30. An upper end part of the rear suspension 15 provided to the right of the rear wheel 30 is supported by a rear suspension support (not shown) provided at a rear end part of a rear part 183Rr (Fig. 3) of the upper right frame 183R.

The lower left frame 184L is provided below the upper left frame 183L. The lower left frame 184L includes a front part 184Lf that extends downward and outward in the vehicle-widthwise direction from the front frame 182, an intermediate part 184Lm that extends backward from a lower end of the front part 184Lf, and a rear part 184Lr that extends backward and upward from a rear end of the intermediate part 184Lm. The rear part 184Lr is attached to the upper left frame 183L.

The left reinforcement frame 185L is provided in front of a rear end of the rear part 184Lr of the lower left frame 184L. The left reinforcement frame 185L has an upper end connected to the upper left frame 183L and a lower end connected to the lower left frame 184L.

As shown in Figs. 2 and 3, in the vehicle body frame 18, the front part 184Lf of the lower left frame 184L, the left reinforcement frame 185L, the front part 184Rf of the lower right frame 184R, and the right reinforcement frame 185R are each provided with a fuel tank support 186 that supports the fuel tank 19. The vehicle body frame 18 is provided with bridges 1881 and 1882 that couple the upper left frame 183L and the upper right frame 183R. The bridge 1881 supports the hinge 40.

### Fuel Tank

As shown in Fig. 2, the fuel tank 19 is provided in front of the seat 16. The fuel tank 19 includes a tank main body 191, a filler portion 192, and a fuel cap 193.

As shown in Figs. 2 and 3, the tank main body 191 is provided below the upper left frame 183L and the upper right frame 183R and above the lower left frame 184L and the lower right frame 184R. The tank main body 191 is provided as it is inclined forward. Note that "the tank 191 being inclined forward" refers to the state in which a joint J1 between an upper half body 1911 and a lower half body 1912 (that will be described) is inclined backward and upward in a side view. The tank main body 191 is supported by the four fuel tank supports 186 of the vehicle body frame 18. More specifically, the tank main body 191 is supported by the two fuel tank supports 186 on the left and right provided at the upper left frame 183L and the upper right frame 183R and the two fuel tank supports 186 on the left and right provided at the left reinforcement frame 185L and the right reinforcement frame 185R.

The tank main body 191 is protected against irregularities, obstacles, jumping stones, and the like on a road surface by the upper left frame 184L and the lower right frame 184R positioned below the tank main body 191. In the tank main body 191, the inlet of a pump main body 71 (that will be described) is provided at front and lower parts of the tank main body 191. The arrangement of the inlet of the pump main body 71 allows fuel in the tank main body 191 to be fully used because the tank main body 191 is inclined forward.

The tank main body 191 includes the upper half body 1911 in a convex shape and the lower half body 1912 in a concave shape.

A lower end circumferential edge of the upper half body 1911 is connected to an upper end circumferential edge of the lower half body 1912. A flange that is not shown is formed along the entire periphery of the lower end of the upper half body 1911. A flange that is not shown is formed along the entire periphery of the upper end part of the lower half body 1912. The flange for the upper half body 1911 and the flange for the lower half body 1912 are joined by welding. The joint J1 between the flange for the upper half body 1911 and the flange for the lower half body 1912 are inclined backward and upward in a side view.

A part of the flange for the lower half body 1912 positioned at a rear surface of the lower half body 1219 preferably has its rear edge bent upward. In this way, the flange for the lower half body 1912 becomes less bendable, which improves the strength of the tank main body 191.

As shown in Fig. 3, a lower surface of the lower half body 1912 includes a projection 1912a that projects downward. The projection 1912a is provided at a front part of the lower half body 1912. The projection 1912a is provided from a left end to a right end of the lower half body 1912. A fuel pump unit 70 is attached to the lower surface of the lower half body 1912.

The fuel pump unit 70 includes a pump main body 71 and a support 72 that supports the pump main body 71. The pump main body 71 and the support 72 are integrally formed. The support 72 is attached at the lower surface of the lower half body 1912 behind the projection 1912a. The pump main body 71 is provided in the tank main body 191. The support 72 has a discharge outlet (not shown) used to discharge fuel from the tank main body 191.

One end of a fuel hose 80 is connected to an injector 90 used to inject fuel to the engine in the power unit 14. The other end of the fuel hose 80 is connected to the discharge outlet (not shown) of the support 72 of the fuel pump unit 70.

The fuel hose 80 extends toward the injector 90 from under the fuel tank 19. The support 72 of the fuel pump unit 70 and at least a part of the fuel hose 80 are provided behind the projection 1912a and overlap the projection 1912a in a front view. Therefore, the support 72 and the fuel hose 80 can be protected by the projection 1912a against jumping stones or the like.

As shown in Figs. 2 and 3, the filler portion 192 is connected to the upper half body 1911 of the tank main body 191 to project upward from the upper half body 1911. The filler portion 192 is inclined so that its upper end is positioned in front of its lower end. The filler portion 192 overlaps the front part 183Lf of the upper left frame 183L and the front part 183Rf of the upper right frame 183R in a side view.

The filler portion 192 is tubular shaped. A fuel inlet 1921 (that will be described) is provided at an upper end of the filler portion 192. The fuel inlet 1921 is sealed by the fuel cap 193.

### Vehicle Body Cover

Referring back to Fig. 1, the vehicle body cover 17 will be described. The vehicle body cover 17 includes a front cover portion 171, the arch portion 174, and left and right foot boards 175.

The front cover portion 171 is provided below the handles 11. The front cover portion 171 stores a part of the steering shaft 12 and the head pipe portion 181 (Fig. 2). A rear edge B1 of the front cover portion 171 extends in the up-down direction in a side view.

The arch portion 174 has a convex front sectional shape and covers the fuel tank 19 (Fig. 2) from above. The arch portion 174 extends in the front-back direction between the front cover portion 171 and the seat 16. The arch portion 174 includes left and right upper side cover portions 172, left and right lower side cover portions 173, and an upper cover portion 176.

The left and right upper side cover portions 172 are provided below the seat 16 and cover the vehicle body frame 18 from the left and right. The left and right lower side cover portions 173 are provided under the left and right upper side cover portions 172. Parts of the left and right upper side cover portions 172 and the left and right lower side cover portions 173 positioned between the front cover portion 171 and the seat 16 form left and right parts of the arch portion 174.

The upper cover portion 176 forms an upper part of the arch portion 174. The upper cover portion 176 is provided between the left and right upper side cover portions 172 and above the fuel tank 19. The upper cover portion 176 is continuous with upper ends of the left and right upper side cover portions 172. According to the embodiment, the upper cover portion 176 is formed to have a front section in an upward rounded arch shape. Note however that the front sectional shape of the upper cover portion 176 is not particularly limited and may be any of various shapes.

A front part 174f of the arch portion 174 has an upper edge that extends backward and obliquely downward from a lower end E2 of the rear edge B1 of the front cover portion 171 in a side view. A rear part 174r of the arch portion 174 has an upper edge that extends backward and obliquely upward from a rear end of the front part 174f in a side view. The upper edge of the rear part 174r of the arch portion 174 is continuous with an upper edge of the front part 16f of the seat 16 in a side view. More specifically, the upper edge of the rear part 174r of the arch portion 174 and the upper edge of the front part 16f of the seat 16 form a substantially stepless smooth slope line in a side view. In a side view, the upper edge of the rear part 174r is substantially parallel to the joint J1 (Fig. 2) of the fuel tank 19.

The foot board portions 175 are provided to the left and right of the arch portion 174 and connected to a lower end of the arch portion 174. A rider puts the feet through the space above the arch portion 174 and places the feet on the foot board portions 175 to ride the saddle riding type vehicle 1.

### Vehicle Body Size

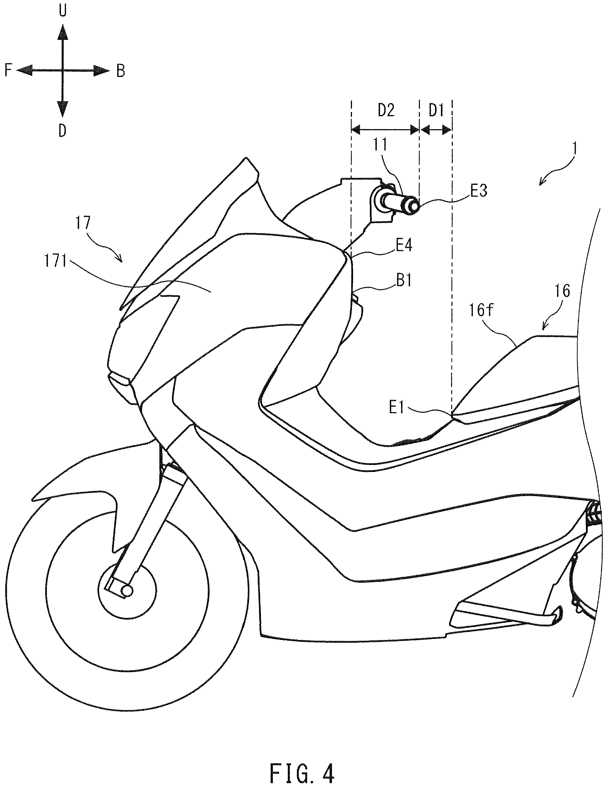

Now, the vehicle body size of the saddle riding type vehicle 1 will be described. Fig. 4 is a left side view of a front part of the saddle riding type vehicle 1.

As shown in Fig. 4, in a side view, a distance D1 in the front-back direction between the rear ends E3 of the handles 11 and the front end E1 of the seat 16 is smaller than a distance D2 in the front-back direction between an upper end E4 of the rear edge B1 of the front cover portion 171 and the rear ends E3 of the handle 11. More specifically, the saddle riding type vehicle 1 has a compact vehicle body in the front-back direction. The rear ends E3 of the handles 11 here refer to the rear ends of the handles 11 when the handles 11 are not rotated, in other words, when the rear ends of the left and right handles 11 are in the same position in the front-back direction.

### Positional Relation between Fuel Tank and Arch Portion

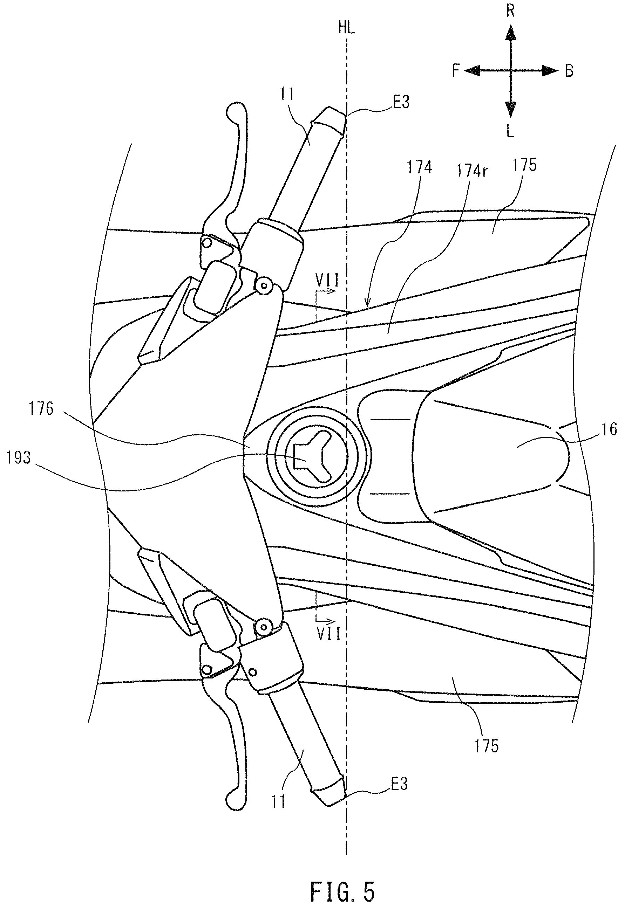

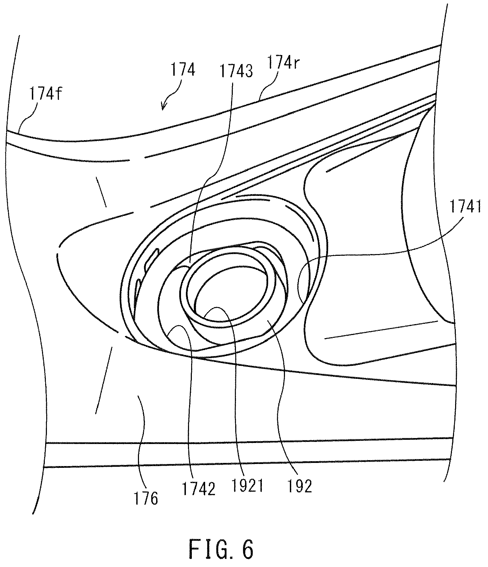

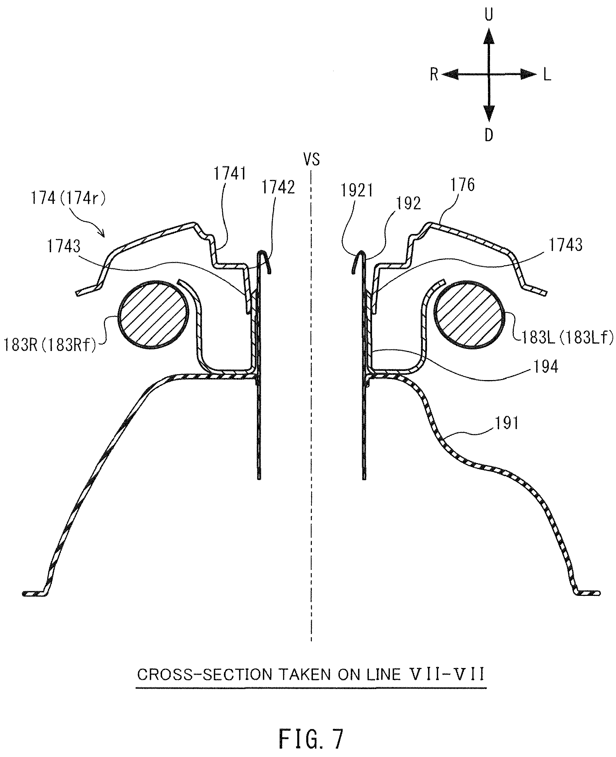

Now, a positional relation between the fuel tank 19 and the arch portion 174 will be described by referring to Figs. 5 to 7. Fig. 5 is a plan view of a periphery of the arch portion 174 of the saddle riding type vehicle 1. Fig. 6 is a perspective view of the rear part 174r of the arch portion 174 as seen from the upper left. Fig. 7 is a front sectional view of the rear part 174r of the arch portion 174 and the fuel tank 19. In Figs. 6 and 7, the fuel cap 193 of the fuel tank 19 is not shown.

As shown in Fig. 5, the fuel cap 193 of the fuel tank 19 is exposed at an upper surface of the rear part 174r of the arch portion 174. According to the embodiment, the fuel cap 193 is in a position that overlaps a straight line HL passing through the rear ends E3 of the handles 11 in a plan view. Now, a detailed structure used to expose the fuel cap 193 at the upper surface of the rear part 174r of the arch portion 174 will be described.

As shown in Figs. 6 and 7, the rear part 174r of the arch portion 174 is provided with a cap arrangement portion 1741, a filler hole 1742, and two plates 1743.

The cap arrangement portion 1741 has a circular concave shape. When the fuel cap 193 is fitted to the fuel inlet 1921 of the filler portion 192, the fuel cap 193 is positioned inside the cap arrangement portion 1741. At the time, a gap is preferably generated between an inner wall surface of the cap arrangement portion 1741 and a side surface of the fuel cap 193. This makes it easy to remove the fuel cap 193.

The filler hole 1742 is formed inside the cap arrangement portion 1741. The filler hole 1742 is a long hole whose length in the front-back direction is greater than that in the left-right direction according to the embodiment, but the shape of the filler hole 1742 is not particularly limited.

The two plates 1743 extend downward from a periphery of the filler hole 1742. According to the embodiment, the two plates 1743 are symmetric with respect to a vertical plane VS through a center of the filler hole 1742 and extending in the front-back direction. However, the number and position of the plates 1743 are not particularly limited. The shape of each of the plates 1743 is not particularly limited.

When the fuel tank 19 is assembled to the vehicle body cover 17, the filler portion 192 is inserted into the filler hole 1742 from under, and the fuel inlet 1921 of the filler portion 192 is projected above from the filler hole 1742. At the time, the two plates 1743 contact the surface of the filler cover 194 mounted to the filler portion 192. When the filler cover 194 is not mounted on the filler portion 192, the two plates 1743 contact a surface of the filler portion 192. In this way, the filler portion 192 is positioned. When the fuel cap 193 is fitted to the fuel inlet 1921 projecting from the filler hole 1742, the fuel cap 193 is provided at the upper surface of the rear part 174r of the arch portion 174 as shown in Fig. 5.

### Effects of the Embodiment

In the saddle riding type vehicle 1 according to the embodiment described above, the front part 174f of the arch portion 174 has its upper edge inclined backward and downward from the lower end E2 of the rear edge B1 of the front cover portion 171 in a side view. The rear part 174r of the arch portion 174 has its upper edge inclined forward and downward from the front end E1 of the seat 16 positioned below the lower end E2 of the rear edge B1 of the front cover portion 171 in a side view. In the arch portion 174, as the length of the rear part 174r in the front-back direction increases, the height of the arch portion 174 as a whole is reduced.

In the above-described saddle riding type vehicle 1, the fuel cap 193 of the fuel tank 19 is exposed at the upper surface of the rear part 174r of the arch portion 174, so that a sufficient length in the front-back direction can be secured for the rear part 174r. Therefore, in the saddle riding type vehicle 1, the height of the arch portion 174 as a whole can be prevented from increasing, which makes it easier for a rider to straddle the arch portion 174, so that comfort in getting on and off from the vehicle can be improved.

In the above-described saddle riding type vehicle 1, the fuel cap 193 of the fuel tank 19 is exposed at the upper surface of the rear part 174r of the arch portion 174, so that a lid used to cover the fuel cap 193 is not provided at the arch portion 174. This can prevent the height of the arch portion 174 from increasing and comfort in getting on and off from the vehicle can be improved. In addition, the fuel cap 193 is exposed and therefore the operation of refueling the fuel tank 19 is simplified.

In the above-described saddle riding type vehicle 1, the upper edge of the rear part 174r of the arch portion 174 and the upper edge of the front part 16f of the seat 16 form a substantially stepless smooth slope line in a side view. This can make the arch portion 174 easier for a rider to straddle to be seated, so that comfort in getting on and off from the vehicle can be even more improved.

In the above-described saddle riding type vehicle 1, the fuel tank 19 is provided in front of the seat 16, so that the tank main body 191 can have a sufficient capacity and a sufficient storage space S1 can be secured under the seat 16.

In the above-described saddle riding type vehicle 1, a part of the hinge 40 is provided in front of the front end E1 of the seat 16. In this way, a large storage space S1 can be secured under the seat 16 without increasing the size of the vehicle body. Furthermore, in the saddle riding type vehicle 1, the fuel cap 193 of the fuel tank 19 is exposed at the upper surface of the rear part 174r of the arch portion 174. Therefore, in the saddle riding type vehicle 1, the position to provide the fuel cap 193 is less likely to be limited by providing the hinge 40 than a vehicle having a lid used to cover a fuel cap. Therefore, the vehicle body can be even more reduced in size.

In the above-described saddle riding type vehicle 1, the filler portion 192 of the fuel tank 19 overlaps the upper left frame 183L and the upper right frame 183R in a side view. More specifically, the filler portion 192 is positioned relatively in a high position. Therefore, the size of the tank main body 191 in the up-down direction can be increased, so that the tank main body 191 can have a greater capacity.

In the above-described saddle riding type vehicle 1, the fuel cap 193 of the fuel tank 19 is provided in a position to overlap the straight line HL passing through the rear ends E3 of the left and right handles 11 in a plan view. The fuel cap 193 is therefore provided near the front end E1 of the seat 16. The rear part 174r of the arch portion 174 provided with the fuel cap 193 has its upper edge extended backward and obliquely upward in a plan view, and therefore the fuel cap 193 is provided in a higher position as it is closer to the front end E1 of the seat 16. As a result, the tank main body 191 can have an increased size in the up-down direction and thus a greater capacity.

In the above-described saddle riding type vehicle 1, the arch portion 174 has plates 1743 that extend downward from the periphery of the filler hole 1742. When the fuel tank 19 is assembled to the vehicle body cover 17, the plates 1743 are allowed to contact the surface of the filler portion 192 of the fuel tank 19, so that the fuel tank 19 can be positioned easily.

In the saddle riding type vehicle 1, the joint J1 between the upper half body 1911 and the lower half body 1912 of the fuel tank 19 is inclined backward and upward in a side view. Therefore, if the inlet of the pump main body 71 is provided at a front and lower part of the tank main body 191, fuel in the fuel tank 19 can be used fully.

The joint J1 between the upper half body 1911 and the lower half body 1912 of the fuel tank 19 is approximately parallel to the upper edge of the rear part 174r of the arch portion 174 in a side view. More specifically, the tank main body 191 of the fuel tank 19 is provided so that the upper surface of the tank main body 191 is provided along the rear part 174r of the arch portion 174. Therefore, the unused space between the tank main body 191 and the rear part 174r of the arch portion 174 is reduced, so that the fuel tank 19 can have an increased capacity.

In the above-described saddle riding type vehicle 1, the fuel pump unit 70 is attached to the lower surface of the fuel tank 19, and the fuel hose 80 runs under the fuel tank 19 and is connected to the fuel pump unit 70. Therefore, the upper surface of the fuel tank 19 can be near the arch portion 174 and the capacity of the fuel tank 19 can be increased as compared to the case of providing a fuel hose and a fuel pump unit at an upper surface of a fuel tank.

In the above-described saddle riding type vehicle 1, the lower surface of the fuel tank 19 has the projection 1912a that projects downward and at least a part of the fuel hose 80 is provided behind the projection 1912a. The fuel hose 80 overlaps the projection 1912a in a front view. In this way, the fuel hose 80 can be protected against jumping stones and the like.

As in the foregoing, the saddle riding type vehicle 1 has a compact vehicle body while it can secure a sufficient capacity for the fuel tank and a sufficient storage space, and the comfort in getting on and off from the vehicle can be improved.

A preferred embodiment has been described but various modifications can be made to provide alternative embodiments.

For example, according to the above-described embodiment, the fuel cap of the fuel tank is provided in the position that overlaps the straight line through the rear ends of the left and right handles in a plan view, but the position of the fuel cap at the upper surface of the rear part of the arch portion is not particularly limited.

According to the above-described embodiment, a part of the hinge is provided in front of the front end of the seat, but the position of the hinge is not particularly limited. For example, the entire hinge may be provided in front of the front end of the seat or the entire hinge may be provided behind the front end of the seat.

According to the embodiment, the upper edge of the rear part of the arch portion and the upper edge of the front part of the seat form a substantially stepless smooth slope line in a side view. However, there may be a step between the upper edge of the rear part of the arch portion and the upper edge of the front part of the seat in a side view.

According to the embodiment, the fuel tank is provided in a forward inclined state and the joint between the upper half body and the lower half body is arranged substantially parallel to the upper edge of the rear part of the arch portion in a side view. But the fuel tank arrangement is not limited to this. For example, the fuel tank may be inclined backward so that the joint of the fuel tank is inclined backward and downward in a side view or the fuel tank may be provided with no inclination so that the joint of the fuel tank is level in a side view.

According to the above-described embodiment, the projection included in the lower surface of the lower half body is positioned at the front part of the lower half body. But the position of the projection is not particularly limited. Also according to the embodiment, the projection is provided from the left end to the right end of the lower half body. But the projection may be provided at the left or right half of the lower half body or only at a center part of the lower half body in the vehicle-widthwise direction. The projection does not have to be included in the lower surface of the lower half body.

According to the above-described embodiment, the filler portion overlaps the upper left frame and he upper right frame in a side view. But the position of the filler portion is not particularly limited. The filler portion may be provided above or below the upper left frame and the upper right frame.

According to the above-described embodiment, the plates that extend downward from the periphery of the filler hole are provided at the rear part of the arch portion in order to position the filler portion and the fuel cap, but the plates do not have to be provided.

Note that in the description of the embodiment, the state of "extending upward" or "extending downward" needs only include a component in an up-down direction. This includes not only a configuration extending in the exact up-down direction but also a configuration extending obliquely with respect to the exact up-down direction. Similarly, according to the present teaching and the embodiment, the state of "projecting downward" needs only include a component in an up-down direction. This includes not only a configuration projecting in the exact up-down direction but also a configuration projecting obliquely with respect to the exact up-down direction.

In the description of the embodiment, the state of "extending backward" or "extending in the front-back direction" needs only include a component in a front-back direction. This includes not only a configuration extending in the exact front-back direction but also a configuration extending obliquely with respect to the exact front-back direction. In the description of the present teaching and the above-described embodiment, the state of "extending outward in the vehicle-widthwise direction" needs only a component in a vehicle-widthwise direction. This includes not only a configuration extending in the exact vehicle-widthwise direction but also a configuration extending obliquely with respect to the exact vehicle-widthwise direction.

The embodiments are described with regard to "portions" of means. According to the present teaching said term referrers to a section of an element or member and, alternatively, to an individual member.

## Claims

1. A saddle riding type vehicle, comprising:
handles (11);
a steering shaft (12) that extends downward from the handles (11);
a head pipe portion (181) having the steering shaft (12) inserted therein;
a seat (16) provided behind the handles (11);
a storage space (S1) provided below the seat (16);
a fuel tank (19) having a fuel inlet (1921) and a fuel cap (193) used to cover the fuel inlet (1921); and
a vehicle body cover (17),
the vehicle body cover (17) including:
a front cover portion (171) provided below the handles (11) to store at least a part of the steering shaft (12) and the head pipe portion (181);
an arch portion (174) provided to extend in a front-back direction between the front cover portion (171) and the seat (16) and cover the fuel tank (19) from above, the arch portion (174) having a convex front sectional shape; and
a foot board portion (175) provided to each of left and right of the arch portion (174) and connected to a lower end of the arch portion (174),
the front cover portion (171) having a rear edge (B1) that extends in an up-down direction in a side view,
a distance (D1) between rear ends (E3) of the handles (11) and a front end (E1) of the seat (16) in the front-back direction being smaller than a distance (D2) between an upper end (E4) of the rear edge (B1) of the front cover portion (171) and the rear
ends (E3) of the handles (11) in the front-back direction in the side view,
the arch portion (174) having a front part (174f) having an upper edge inclined backward and downward and a rear part (174r) having an upper edge inclined backward and upward in the side view, **characterized in that** the fuel cap (193) being exposed at an upper surface of the rear part (174r) of the arch portion (174).

2. A saddle riding type vehicle according to claim 1, **characterized by**
a hinge (40) used to support a front part (16f) of the seat (16) so that the seat (16) can rotate in the up-down direction,
at least a part of the hinge (40) being provided in front of the front end (E1) of the seat (16).

3. A saddle riding type vehicle according to claim 1 or 2, **characterized in that** an upper edge of the front part (16f) of the seat (16) is continuous with the upper edge of the rear part (174r) of the arch portion (174) and extends backward and upward, in the side view.

4. A saddle riding type vehicle according to any one of claims 1 to 3, **characterized by** left and right handles (11), wherein the fuel cap (193) is provided in a position that overlaps a straight line (HL) passing through rear ends (E3) of the left and right handles (11) in a plan view.

5. A saddle riding type vehicle according to any one of claims 1 to 4, **characterized by** a frame (183L, 183R) provided in the arch portion (174) to extend in the front-back direction, the fuel tank (19) including:
a tank main body (191); and
a filler portion (192) connected to the tank main body (191) and having the fuel inlet (1921) at its upper end,
the filler portion (192) overlapping the frame (183L, 183R) in the side view.

6. A saddle riding type vehicle according to claim 5, **characterized in that** the arch portion (174) includes:
a hole (1742) formed at the upper surface of the rear part to expose the fuel cap (193); and
a plate (1743) provided to extend downward from a periphery of the hole (1742) and
contact a side surface of the filler portion (192).

7. A saddle riding type vehicle according to any one of claims 1 to 6, **characterized in that** the fuel tank (19) includes:
an upper half body (1911) formed in a convex shape; and
a lower half body (1912) formed in a concave shape and having an upper end peripheral part connected to a lower end peripheral part of the upper half body (1911), and
the connection portion between the upper half body (1911) and the lower half body (1912) is inclined backward and upward in the side view.

8. A saddle riding type vehicle according to claim 7, **characterized in that** the connection portion between the upper half body (1911) and the lower half body (1912) is substantially parallel to the upper edge of the rear part (174r) of the arch portion (174) in the side view.

9. A saddle riding type vehicle according to any one of claims 1 to 8, **characterized by** a fuel pump unit (70) attached to a lower surface of the fuel tank (19); and
a fuel hose (80) running under the fuel tank (19) and connected to the fuel pump unit (70).

10. A saddle riding type vehicle according to claim 9, **characterized in that** the lower surface of the fuel tank (19) includes a projection (1912a) that projects downward, and
at least a part of the fuel hose (80) is provided behind the projection (1912a) in a position that overlaps the projection (1912a) in a front view.

## Patentansprüche

1. Ein Sattel-Reit-Typ-Fahrzeug, das umfasst:
Hand-Griffe (11);
eine Lenkwelle (12), die sich nach unten von den Hand-Griffen (11) erstreckt;
einen Kopf-Rohr-Abschnitt (181), der die Lenkwelle (12) darin eingesetzt hat;
einen Sitz (16), vorgesehen hinter den Hand-Griffen (11);
einen Stau-Raum (S1), vorgesehen unter dem Sitz (16);
einen Kraftstoff-Tank (12), der einen Kraftstoff-Einlass (1921) und eine Kraftstoff-Kappe (193), verwendet zum Abdecken des Kraftstoff-Einlass (1921), hat; und
eine Fahrzeug-Körper-Abdeckung (17),
die Fahrzeug-Körper-Abdeckung (17) beinhaltet:
einen vorderen Abdeckabschnitt (171), vorgesehen unterhalb der Hand-Griffe (11), um zumindest einen Teil der Lenkwelle (12) und des Kopf-Rohr-Abschnitts (181) aufzunehmen;
einen Bogenabschnitt (174), vorgesehen, um sich in Vorder-Rück-Richtung zwischen dem vorderen Abdeckabschnitt (171) und dem Sitz (16) zu erstrecken, um den Kraftstoff-Tank (19) von oben abzudecken, der Bogenabschnitt (174) hat eine konvexe vordere Schnitt-Form; und
einen Fuß-Ablage-Abschnitt (175), vorgesehen an jeder von Links und Rechts des Bogenabschnitts (174) und mit einem unteren Ende des Bogenabschnitts (174) verbunden;
der vordere Abdeckabschnitt (171) hat eine hintere Kante (B1), die sich in eine oben-unten Richtung in einer Seiten-Ansicht erstreckt,
ein Abstand (D1) zwischen hinteren Enden (E3) der Hand-Griffe (11) und einem vorderen Ende (E1) des Sitzes (16) in der Vorder-Rück-Richtung ist kleiner als ein Abstand (D2) zwischen einem oberen Ende (E4) der hinteren Kante (B1) des vorderen Abdeckabschnitts (171) und den hinteren Enden (E3) der Hand-Griffe (11) in der Vorder-Rück-Richtung in der Seiten-Ansicht,
der Bogenabschnitt (174) hat einen vorderen Teil (174f), der eine obere Kante hat,
geneigt nach hinten und unten, und einen hinteren Teil (174r), der eine untere Kante hat, geneigt nach hinten und oben, in der Seiten-Ansicht, **dadurch gekennzeichnet,**
**dass** die Kraftstoff-Kappe (193) an einer oberen Fläche des hinteren Teils (174r) des Bogenabschnitts (174) freiliegt.

2. Ein Sattel-Reit-Typ-Fahrzeug gemäß Anspruch 1, **gekennzeichnet durch** eine Aufhängung (40), verwendet, um einen vorderen Teil (16f) des Sitzes (16) zu lagern, so dass der Sitz (16) in eine oben-unten Richtung drehen kann,
zumindest ein Teil der Aufhängung (40) ist vor dem vorderen Ende (E1) von dem Sitz (16) vorgesehen.

3. Ein Sattel-Reit-Typ-Fahrzeug gemäß Anspruch 1 oder 2, **dadurch gekennzeichnet, dass** eine obere Kante des vorderen Teils (16f) des Sitzes (16) kontinuierlich mit der oberen Kante des hinteren Teils (174r) von dem Bogenabschnitt (174) ist, und sich nach hinten und oben in der Seiten-Ansicht erstreckt.

4. Ein Sattel-Reit-Typ-Fahrzeug gemäß irgendeinem der Ansprüche 1 bis 3,
**gekennzeichnet durch** linke und rechte Hand-Griffe (11), wobei die Kraftstoff-Kappe (193) in einer Position vorgesehen ist, die eine gerade Linie (HL), welche sich **durch** hintere Enden (E3) der linken und rechten Hand-Griffe (11) in einer Draufsicht erstreckt, überlappt.

5. Ein Sattel-Reit-Typ-Fahrzeug gemäß irgendeinem der Ansprüche 1 bis 4,
**gekennzeichnet durch** einen Rahmen (183L, 183R), vorgesehen in dem Bogenabschnitt (174), um sich in Vorder-Rück-Richtung zu erstrecken,
der Kraftstoff-Tank (19) beinhaltet:
einen Tank-Haupt-Körper (191); und
einen Einfüll-Abschnitt (192), der mit dem Tank-Haupt-Körper (191) verbunden ist und
den Kraftstoff-Einlass (1921) an dessen oberen Ende hat,
der Einfüll-Abschnitt (192) überlappt den Rahmen (183L, 183R) in der Seiten-Ansicht.

6. Ein Sattel-Reit-Typ-Fahrzeug gemäß Anspruch 5, **dadurch gekennzeichnet, dass** der Bogenabschnitt (174) beinhaltet:
ein Loch (1742), ausgebildet in der oberen Fläche des hinteren Teils, um die Kraftstoff-Kappe (193) freizulegen; und
eine Platte (1743), die vorgesehen ist, um sich nach unten von einem Umfang des Lochs (1742) zu erstrecken und eine Seitenfläche des Einfüll-Abschnitts (192) kontaktiert.

7. Ein Sattel-Reit-Typ-Fahrzeug gemäß irgendeinem der Ansprüche 1 bis 6, **dadurch gekennzeichnet, dass** der Kraftstoff-Tank (19) beinhaltet, einen oberen Halb-Körper (1911) ausgebildet in einer konvexen Form; und
einen unteren Halb-Körper (1912), der in einer konkaven Form ausgebildet ist und einen oberen End-Umfangs-Abschnitt hat, der mit einem unteren End-UmfangsAbschnitt des oberen Halb-Körpers (1911) verbunden ist,
der Verbindungsabschnitt zwischen dem oberen Halb-Körper (1911) und dem unteren Halb-Körper (1912) ist nach hinten und oben in der Seiten-Ansicht geneigt.

8. Ein Sattel-Reit-Typ-Fahrzeug gemäß Anspruch 7, **dadurch gekennzeichnet, dass** der Verbindungsabschnitt zwischen dem oberen Halb-Körper (1911) und dem unteren Halb-Körper (1912) im Wesentlichen parallel zu der oberen Kante des hinteren Teils (174r) von dem Bogenabschnitt (174) in der Seiten-Ansicht ist.

9. Ein Sattel-Reit-Typ-Fahrzeug gemäß irgendeinem der Ansprüche 1 bis 8, **gekennzeichnet durch** eine Kraftstoff-Pumpen-Einheit (70), angebracht an einer unteren Fläche des Kraftstoff-Tanks (19); und einer Kraftstoff-Leitung (80), die unter dem Tank (19) verläuft und mit der Kraftstoff-Pumpen-Einheit (70) verbunden ist.

10. Ein Sattel-Reit-Typ-Fahrzeug gemäß Anspruch 9, **dadurch gekennzeichnet, dass** die untere Fläche des Kraftstoff-Tanks (19) einen Vorsprung (1912a) beinhaltet, der nach unten vorspringt, und
zumindest ein Teil der Kraftstoff-Leitung (80) ist hinter dem Vorsprung (1912a) in einer Position vorgesehen, welche den Vorsprung (1912a) in einer Vorder-Ansicht überlappt.

## Revendications

1. Véhicule du type à selle comprenant :
des poignées (11) ;
un arbre de direction (12) qui s'étend vers le bas à partir des poignées (11) ;
une partie de tuyau de tête (181) dans laquelle est inséré l'arbre de direction (12) ;
un siège (16) disposé derrière les poignées (11) ;
un espace de rangement (S1) disposé en dessous du siège (16) ;
un réservoir de carburant (19) comportant une entrée de carburant (1921) et un bouchon de réservoir de carburant (193) utilisé pour boucher l'entrée de carburant (1921) ; et
un capot de carrosserie de véhicule (17),
le capot de carrosserie de véhicule (17) incluant :
une partie de capot avant (171) disposée en dessous des poignées (11) pour contenir au moins une partie de l'arbre de direction (12) et la partie de tuyau de tête (181) ;
une partie d'arc (174) disposée de manière à s'étendre dans la direction avant-arrière entre la partie de capot avant (171) et le siège (16) et recouvrir le réservoir de carburant (19) par dessus, la partie d'arc (174) ayant une forme convexe en coupe frontale ; et
une partie de marchepied (175) disposée au niveau de chacune des parties d'arc droite et gauche (174) et reliée à l'extrémité inférieure de la partie d'arc (174),
la partie de capot avant (171) comportant un bord arrière (B1) s'étendant dans la direction haut-bas, vue de côté,
la distance (D1) entre les extrémités arrière (E3) des poignées (11) et l'extrémité avant (E1) du siège (16) dans la direction avant-arrière étant plus petite que la distance (D2) entre l'extrémité supérieure (E4) du bord arrière (B1) de la partie de capot avant (171) et les extrémités arrières (E3) des poignées (11) dans la direction avant-arrière, vue de côté,
la partie d'arc (174) comportant une partie avant (174f) ayant un bord supérieur incliné vers l'arrière et vers le bas et une partie arrière (174r) ayant un bord supérieur incliné vers l'arrière et vers le haut, vue de côté, **caractérisé en ce que** le bouchon de réservoir de carburant (193) est exposé au niveau de la surface supérieure de la partie arrière (174r) de la partie d'arc (174).

2. Véhicule du type à selle selon la revendication 1, **caractérisé par**
une articulation (40) utilisée pour supporter la partie avant (16f) du siège (16), de façon que le siège (16) puisse tourner dans la direction haut-bas,
au moins une partie de l'articulation (40) étant disposée devant l'extrémité avant (E1) du siège (16).

3. Véhicule du type à selle selon la revendication 1 ou 2, **caractérisé en ce que** le bord supérieur de la partie avant (16f) du siège (16) est continu avec le bord supérieur de la partie arrière (174r) de la partie d'arc (174) et s'étend vers l'arrière et vers le haut, vu de côté.

4. Véhicule du type à selle selon l'une quelconque des revendications 1 à 3, **caractérisé par** des poignées gauche et droite (11), dans lequel le bouchon de réservoir de carburant (193) est disposé dans une position qui recouvre une ligne droite (HL) passant par les extrémités arrière (E3) des poignées gauche et droite (11), en vue plane.

5. Véhicule du type à selle selon l'une quelconque des revendications 1 à 4, **caractérisé par** un cadre (183L, 183R) disposé dans la partie d'arc (174) s'étendant dans la direction avant-arrière,
le réservoir de carburant (19) incluant :
un corps principal de réservoir (191) ; et
une partie de filtre (192) reliée au corps principal de réservoir (191) et comportant l'entrée de carburant (1921) à son extrémité supérieure,
la partie de filtre (192) recouvrant le cadre (183L, 183R), vu de côté.

6. Véhicule du type à selle selon la revendication 5, **caractérisé en ce que** la partie d'arc (174) comporte :
un trou (1742) formé au niveau de la surface supérieure de la partie arrière pour exposer le bouchon de réservoir de carburant (193) ; et
une plaque (1743) disposée de manière à s'étendre vers le bas depuis la périphérie du trou (1742) et en contact avec la surface latérale de la partie de filtre (192).

7. Véhicule du type à selle selon l'une quelconque des revendications 1 à 6, **caractérisé en ce que** le réservoir de carburant (19) comporte :
un demi-corps supérieur (1911) conformé sous forme convexe ; et
un demi-corps inférieur (1912) conformé sous forme concave et ayant une partie périphérique d'extrémité supérieure reliée à une partie périphérique d'extrémité inférieure du demi-corps supérieur (1911), et
la partie de liaison entre le demi-corps supérieur (1911) et le demi-corps inférieur (1912) est inclinée vers l'arrière et vers le haut, vue de côté.

8. Véhicule du type à selle selon la revendication 7, **caractérisé en ce que** la partie de liaison entre le demi-corps supérieur (1911) et le demi-corps inférieur (1912) est sensiblement parallèle au bord supérieur de la partie arrière (174r) de la partie d'arc (174), vue de côté.

9. Véhicule du type à selle selon l'une quelconque des revendications 1 à 8, **caractérisé par** une unité de pompe de carburant (70) fixée à la surface inférieure du réservoir de carburant (19) ; et
un tuyau de carburant (80) passant sous le réservoir de carburant (19) et relié à l'unité de pompe de carburant (70).

10. Véhicule du type à selle selon la revendication 9, **caractérisé en ce que** la surface inférieure du réservoir de carburant (19) comporte une projection (1912a) qui se projette vers le bas, et
au moins une partie du tuyau de carburant (80) est disposée derrière la projection (1912a) dans une position qui recouvre la projection (1912a), vue de face.
